(19) Europäisches Patentamt
European Patent Office
Office européen des brevets

(11) **EP 4 270 087 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **22170052.9**

(22) Anmeldetag: **26.04.2022**

(51) Internationale Patentklassifikation (IPC):
***G02B 26/12*** *(2006.01)*

(52) Gemeinsame Patentklassifikation (CPC):
**G02B 26/12**

(54) **LASERSCANNER UND SPIEGELPYRAMIDE SOWIE VERFAHREN ZU DEREN HERSTELLUNG**

LASER SCANNER AND MIRROR PYRAMID AND METHOD FOR PRODUCING THE SAME

BALAYEUR LASER ET PYRAMIDE DE MIROIR ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.11.2023 Patentblatt 2023/44**

(73) Patentinhaber: **RIEGL Laser Measurement Systems GmbH**
**3580 Horn (AT)**

(72) Erfinder:
• **ULLRICH, Andreas**
**3003 Gablitz (AT)**

• **REICHERT, Rainer**
**3580 Horn (AT)**

(74) Vertreter: **Weiser & Voith**
**Patentanwälte Partnerschaft**
**Kopfgasse 7**
**1130 Wien (AT)**

(56) Entgegenhaltungen:
**EP-A1- 3 982 150     WO-A1-2008/081081**
**AT-A4- 510 045**

**Beschreibung**

Die vorliegende Erfindung betrifft einen Laserscanner gemäß Anspruch 6.

Die Erfindung betrifft ferner eine Spiegelpyramide gemäß Anspruch 1 und ein Verfahren zum Herstellen einer Spiegelpyramide gemäß Anspruch 8.

Laserscanner sind beispielsweise aus der EP 3 792 653 A1 derselben Anmelderin bekannt. Der auf die sich drehende Spiegelpyramide gerichtete Sendestrahl wird von dieser periodisch über einen Abtastwinkelbereich ("Abtastfächer") verschwenkt, und der umgebungsreflektierte Empfangsstrahl wird auf demselben Wege zurückempfangen, d.h. die momentan zum Aussenden verwendete Spiegelfacette wird gleichzeitig zum Umlenken des aus derselben Richtung empfangenen Empfangsstrahls auf den Laserempfänger verwendet.

Die vorliegende Erfindung befasst sich mit jener Art von Laserscannern, bei denen zumindest eine Spiegelfacette eine andere Neigung gegenüber der Drehachse hat als die übrigen Spiegelfacetten, wie sie z.B. aus den Schriften AT 510 045 A4 und EP 3 982 150 A1 bekannt sind. Dadurch kann mit einem einzigen Sendestrahl nicht nur ein einziger Abtastfächer erzeugt werden, sondern je nach Anzahl der verschiedenen Neigungen zwei, drei oder mehr Abtastfächer, die voneinander divergieren. Laserscanner dieser Art werden für unterschiedliche Anwendungszwecke benötigt, beispielsweise zur Erfassung von Hinterschneidungen der Umgebung, für Kompensations- oder Differenzmessungen durch zweimaliges Abtasten der Umgebung od.dgl.

Die Erfindung setzt sich zum Ziel, Laserscanner dieser Art so zu verbessern, dass sie eine bessere Reichweite und geringere Fehlerrate haben.

Dieses Ziel wird in einem ersten Aspekt der Erfindung mit einer Spiegelpyramide gemäß Anspruch 1 und in einem zweiten Aspekt der Erfindung mit einem Laserscanner gemäß Anspruch 6 erreicht.

Mit dem Laserscanner bzw. der Spiegelpyramide gemäß der Erfindung können mit einem Sendestrahl mehrere divergierende Abtastfächer erzeugt werden, deren Fächerwinkel gleich groß sind. Wenn der Laserscanner in einer abtastebenenfremden Fortbewegungsrichtung, z.B. normal zu einem der Abtastfächer, über die Umgebung bewegt wird, überlappen sich so die von den einzelnen Abtastfächern auf der Umgebung erzeugten Abtastlinien, d.h. Schnittlinien der Abtastfächer mit der Umgebung, in Fortbewegungsrichtung gesehen bestmöglich. Das kann beispielsweise dazu verwendet werden, ein und dieselben Punkte der Umgebung mehrfach abzutasten oder ein besonders dichtes, regelmäßiges Netz von Abtastpunkten über die Umgebung zu legen.

Gemäß der Erfindung hat der Laserscanner bzw. die Spiegelpyramide zumindest vier Spiegelfacetten, wobei unter allen durch Permutieren erhaltbaren Abfolgen von Spiegelfacetten rund um die Drehachse jene Abfolge gewählt ist, bei der sich eine minimale Streuung der Empfangsflächen aller Spiegelfacetten ergibt, wobei als Empfangsfläche einer Spiegelfacette ihre in Richtung eines von ihr reflektierten Sendestrahls projizierte Fläche gilt, dessen Auftreffpunkt in der Mitte des genannten Bogenwinkels liegt.

Durch die erfindungsgemäße Minimierung der Flächenstreuung der Empfangsflächen der Spiegelfacetten und der damit einhergehenden Vergleichmäßigung der Empfangsempfindlichkeit des Laserscanners in den verschiedenen Abtastfächern (seinen "Empfangskanälen") kann eine optimale Aussteuerung des einzigen, für alle Abtastfächer zuständigen Laserempfängers erreicht werden. Im Ergebnis kann mit der erfindungsgemäßen Spiegelpyramide ein Laserscanner mit mehreren divergierenden, von einem einzigen Sendestrahl erzeugten Abtastfächern aufgebaut werden, der im Schnitt eine verbesserte Messempfindlichkeit hat, ohne die Gefahr von Messfehlern durch Übersteuerungen in einzelnen Empfangskanälen. Ein solcherart aufgebauter Laserscanner hat eine bessere Reichweite und geringere Fehlerrate.

In einem dritten Aspekt schafft die Erfindung ein spezialisiertes Verfahren zum Herstellen einer Spiegelpyramide mit einer Drehachse für einen Laserscanner, bei dessen Betrieb ein Sendestrahl nicht-normal zur Drehachse auf die sich drehende Spiegelpyramide auftrifft, welche Spiegelpyramide zumindest vier gegenüber der Drehachse unter jeweils einer vorgegebenen Neigung geneigte Pyramidenseiten hat, die jeweils eine Spiegelfacette bilden, wobei zumindest zwei Spiegelfacetten unterschiedliche Neigungen haben, umfassend:

in einem Computer, Erzeugen einer Gruppe von Datensätzen, von denen jeder eine andere, durch Permutieren erhaltbare Abfolge von Spiegelfacetten rund um die Drehachse repräsentiert, wobei in jeder Abfolge die Spiegelpyramide so ausgebildet ist, dass im Betrieb des Laserscanners der Auftreffpunkt des Sendestrahls auf der Spiegelpyramide in Drehachsenrichtung gesehen auf jeder Spiegelfacette einen gleich großen Bogenwinkel überstreicht; während oder nach dem Erzeugen, für jeden Datensatz, im Computer: Berechnen einer Streuung der Empfangsflächen aller Spiegelfacetten, wobei als Empfangsfläche einer Spiegelfacette ihre in Richtung eines von ihr reflektierten Sendestrahls projizierte Fläche gilt, dessen Auftreffpunkt in der Mitte des genannten Bogenwinkels liegt; im Computer, Auswählen des Datensatzes mit der minimalen Streuung; und Herstellen der Spiegelpyramide mit der vom ausgewählten Datensatz repräsentierten Abfolge von Spiegelfacetten jeweils vorgegebener Neigung.

Das Verfahren der Erfindung eignet sich besonders für Spiegelpyramiden bzw. Laserscanner, bei denen der Sendestrahl im Betrieb des Laserscanners parallel zur Drehachse auf die Spiegelpyramide auftrifft. Wenn beispielsweise eine Spiegelfacette unter 45° zur Drehachse geneigt ist, dann erzeugt sie einen ebenen Abtastfächer, der besonders gerade Abtastlinien auf der Umgebung erzeugen kann.

Mit der Erfindung können insbesondere Spiegelpyramiden bzw. Laserscanner gefertigt werden, bei denen alle Spiegelfacetten unterschiedlich gegenüber der Drehachse geneigt sind, bevorzugt auch mit fünf oder mehr Spiegelfacetten.

In bevorzugter Ausgestaltung der Erfindung erfolgt das Herstellen mit Hilfe eines 3D-Druckers, dem der Datensatz vom Computer zugeführt wird. Weiters bevorzugt wird die Spiegelpyramide als Hohlpyramide hergestellt, bei der jede Spiegelfacette eine individuelle Wandstärke hat, wobei die Wandstärken der Spiegelfacetten so gewählt sind, dass die Spiegelpyramide um die Drehachse dynamisch ausgewuchtet ist. Wenn zur Herstellung der Spiegelpyramide ein 3D-Drucker verwendet wird, dann wird jede Spiegelfacette vom 3D-Drucker mit einer individuellen Wandstärke gedruckt, wobei die Wandstärken vom Computer so berechnet und dem 3D-Drucker zugeführt werden, dass die hergestellte Spiegelpyramide um die Drehachse dynamisch ausgewuchtet ist. Die Spiegelpyramide wird dabei bevorzugt aus einem 3D-druckbaren Sintermaterial gefertigt.

Die Erfindung wird nachstehend anhand von in den Zeichnungen dargestellten Ausführungsbeispielen näher erläutert. In den Zeichnungen zeigen:

Fig. 1 den Laserscanner der Erfindung (ohne Träger) in einer schematischen Perspektivansicht;
Fig. 2 den Laserscanner von Fig. 1 in einem Blockschaltbild mit schematisch eingezeichneten Strahlverläufen;
die Fig. 3a - 3c die Spiegelpyramide und ein Gehäusefenster des Laserscanners der Fig. 1 und 2 in drei verschiedenen Drehstellungen der Spiegelpyramide, u.zw. jeweils in Relation zu den Sende- und Empfangsaperturen von Lasersender und -empfänger in einer Draufsicht auf die Spiegelpyramide in Richtung ihrer Drehachse;
die Fig. 4 und 5 eine weitere Ausführungsform der Spiegelpyramide der Erfindung in einer Draufsicht (Fig.4) und im Schnitt (Fig. 5);
die Fig. 6a bis 6l zwölf Permutationen der Abfolge der Spiegelfacetten rund um die Drehachse der Spiegelpyramide von Fig. 4 jeweils in einer Draufsicht;
Fig. 7 eine Tabelle der Permutationen der Spiegelfacetten-Abfolgen der Fig. 6a bis 6l;
Fig. 8 eine Vorrichtung zur Herstellung der Spiegelpyramide der Erfindung; und
Fig. 9 ein Flussdiagramm des Verfahrens zur Herstellung der Spiegelpyramide der Erfindung.

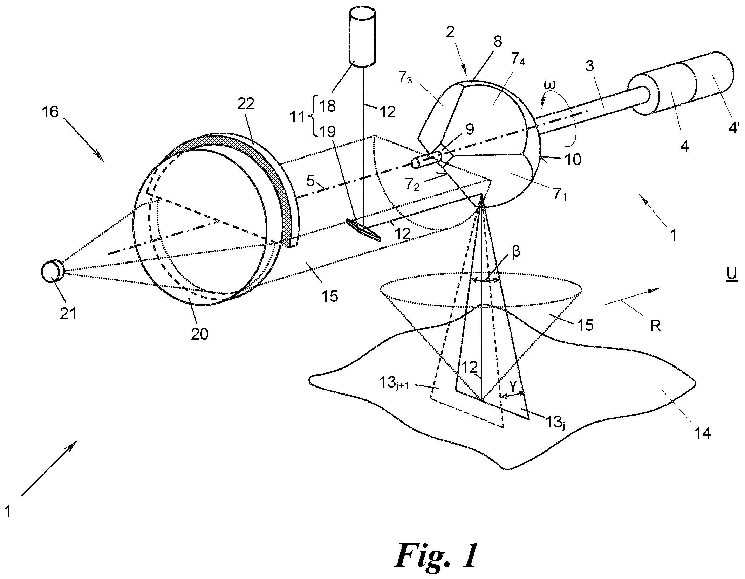

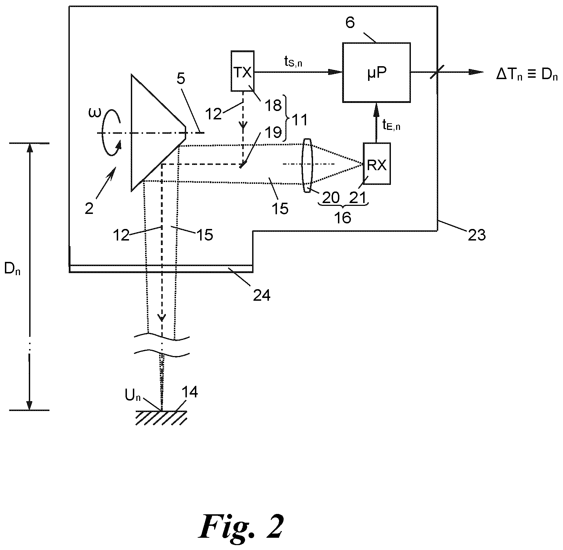

Fig. 1 zeigt schematisch einen Laserscanner 1, der eine Spiegelpyramide 2 umfasst, welche auf einer Welle 3 montiert ist und von einem Motor 4 um eine Drehachse 5 gedreht wird. An den Motor 4 ist ein Drehwinkelkodierer bzw. -sensor 4' angeflanscht, welcher die aktuelle Stellung der Spiegelpyramide 2 misst bzw. kodiert und an eine Elektronikeinheit 6 (Fig. 2) signalisiert.

Die Spiegelpyramide 2 hat die Form einer mehrseitigen (in Fig. 1: vierseitigen) Pyramide, deren Pyramidenachse ihre Drehachse 5 ist. Die zur Drehachse 5 geneigten Pyramidenseiten bilden die Spiegelfacetten $7_i$ (i = 1 ... I) der Spiegelpyramide 2. Die Anzahl I der Spiegelfacetten ist 4, 5 oder mehr.

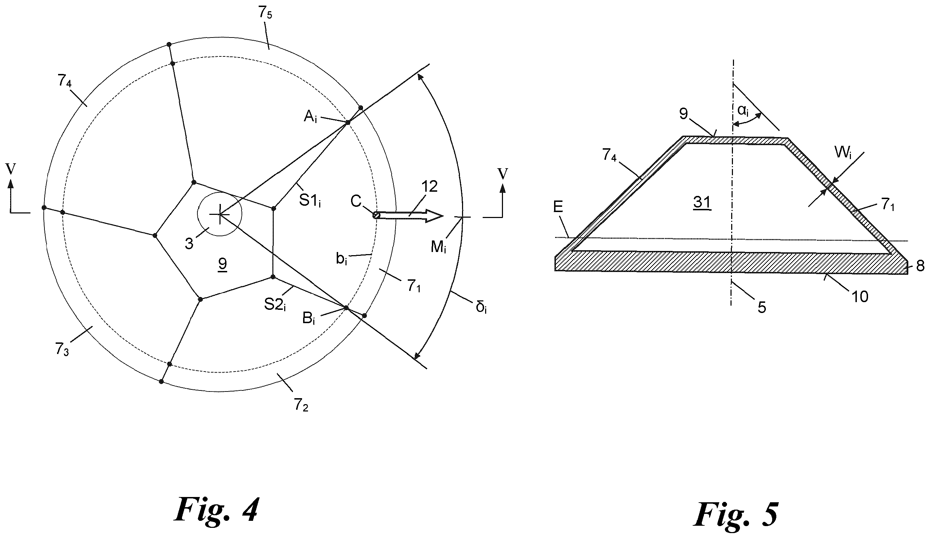

Es versteht sich, dass in der vorliegenden Beschreibung unter dem Begriff "Pyramidenform" bzw. "Spiegelpyramide" jede beliebige Art von Pyramide mit beliebiger polygonzugförmiger Grundfläche (Basis) verstanden wird, u.zw. sowohl gerade als auch "schiefe" Pyramiden (Pyramidenachse nicht senkrecht zur Grundfläche), regelmäßige als auch unregelmäßige Pyramiden, spitze oder "stumpfe" Pyramiden ("Pyramidenstumpfe"), sowie auch solche Pyramiden, die an ihrer Spitze und/oder Basis beschnitten sind, wie die in den Fig. 1 und 5 gezeigten Pyramiden, deren unterer Bereich 8 kreisförmig beschnitten ist, um den Luftwiderstand bei der Drehung zu verringern. Eine "stumpfe" bzw. an ihrer Spitze beschnittene Spiegelpyramide 2 hat eine Deckfläche 9, die in der Regel parallel zur Bodenfläche 10 ihres unteren Bereichs 8 ist. Gegebenenfalls könnten die Deckfläche 9 und die Bodenfläche 10 auch zueinander nicht-parallel sein.

Auf die Spiegelpyramide 2 ist ein Lasersender 11 gerichtet, der einen Sendestrahl 12 auf die Spiegelfacetten $7_i$ aussendet, u.zw. auf jeweils eine (die "aktive") Spiegelfacette $7_i$ während deren Drehung, so dass der Sendestrahl 12 durch die Drehbewegung der Spiegelpyramide 2 periodisch über einen Abtastwinkel β verschwenkt wird, um mehrere Abtastfächer $13_j$ (j = 1 ... J) zu bilden. Mit jedem Abtastfächer $13_j$ kann beispielsweise eine Oberfläche 14 der Umgebung U "zeilenweise" abgetastet werden, wenn der Abtastfächer $13_j$, z.B. der gesamte Laserscanner 1, in einer abtastebenenfremden Richtung R, z.B. normal zu einem bzw. zum mittleren der Abtastfächer $13_j$, über die Oberfläche 14 bewegt wird.

Die Reflexionen des Sendestrahls 12 bzw. Abtastfächers $13_j$ von der Oberfläche 14 werden mit einem Laserempfänger 16 detektiert, der diese als Empfangsstrahl 15 - wieder über den Weg der Spiegelpyramide 2 - zurückempfängt, in elektrische Signale umwandelt und der Elektronikeinheit 6 zur Auswertung zuführt. Letztere steuert dazu den Lasersender 11 entsprechend an, z.B. getriggert, gepulst, moduliert usw., wie in der Technik bekannt.

Die hier betrachtete Spiegelpyramide 2 ist von einer speziellen Art, u.zw. hat zumindest eine der Pyramiden-

seiten $7_i$ eine andere Neigung $\alpha_i$ gegenüber der Drehachse 5 als die übrigen Pyramidenseiten $7_i$. Dadurch ergeben sich bei der Drehung der Spiegelpyramide 2 nicht nur ein einziger Abtastfächer, sondern je nach Anzahl unterschiedlicher Neigungen $\alpha_i$ zwei, drei oder mehr Abtastfächer $13_j$, die voneinander divergieren. Der jeweilige Divergenzwinkel $\gamma$ zwischen zwei Abtastfächern $13_j$ und $13_{j+1}$ entspricht dabei dem Doppelten der Differenz zwischen den Neigungen $\alpha_i$, $\alpha_{i+m}$ (m > 0) zweier diese beiden Abtastfächer $13_j$, $13_{j+i}$ erzeugenden Spiegelfacetten $7_i$, $7_{i+m}$. Laserscanner dieser Art werden für unterschiedliche Anwendungszwecke benötigt, beispielsweise zur Erfassung von Hinterschneidungen der Oberfläche 14, für Kompensations- oder Differenzmessungen durch zweimaliges Abtasten derselben Oberfläche 14 od.dgl.

Der Lasersender 11 könnte direkt im Strahlengang des Empfangsstrahls 15 zwischen Spiegelpyramide 2 und Laserempfänger 16 liegen, beispielsweise wenn es sich um einen sehr kleinen Halbleiterlaser handelt. Im gezeigten Beispiel setzt sich der Lasersender 11 jedoch aus einem größeren Laser 18 außerhalb des Empfangsstrahlengangs und einem kleinen Umlenkspiegel 19 zusammen, welcher im Empfangsstrahlengang zwischen Spiegelpyramide 2 und Laserempfänger 16 liegt und den aus dem Laser 18 austretenden Laserstrahl 12 etwa parallel (oder auch leicht schräg, falls gewünscht) zur Drehachse 5 auf die Spiegelpyramide 2 richtet.

Der Laserempfänger 16 könnte grundsätzlich von jeder in der Technik bekannten Art sein, beispielsweise ein großformatiges fotoempfindliches Element, ein CCD-Chip usw. Im gezeigten Beispiel weist der Laserempfänger 16 (zumindest) eine Sammellinse 20 und ein dieser im Empfangsstrahlengang nachgeordnetes, im Brennpunkt der Sammellinse 20 angeordnetes Empfangselement 21 auf. Das Empfangselement 21 ist hochempfindlich, beispielsweise ein Photomultiplier oder eine Lawinenphotodiode.

Der Sammellinse 20 im Empfangsstrahlengang vorgeordnet ist eine (hier: halbkreisförmige) Blende 22. Die optische Achse der Sammellinse 20 fällt mit der Drehachse 5 der Spiegelpyramide 2 zusammen. Die Größe der Sammellinse 20 in Verbindung mit der Blende 22, d.h. abzüglich ihres von der Blende 22 ausgeblendeten Teils, und die Größe der jeweils aktiven Spiegelfacette $7_i$, d.h. die kleinere der beiden Größen, bestimmt die Empfangsapertur des Laserempfängers 16. Anstelle der Kombination aus Sammellinse 20 und vorgeordneter Blende 22 könnte auch einfach die Sammellinse 20 beschnitten sein, d.h. der zuvor durch die Blende 22 definierte Teil der Sammellinse 20 "weggeschnitten" sein, wodurch die Sammellinse 20 Kreissektorform oder (hier:) Halbkreisform hat.

Wie in Fig. 2 gezeigt ist der Sendestrahl 12 beispielsweise ein gepulster Laserstrahl mit einzelnen Sendeimpulsen, die jeweils zu einem Sendeimpulszeitpunkt $t_{S,n}$ ausgesandt, nach Ablenkung durch die Spiegelpyramide 2 von einem Punkt $U_n$ der Oberfläche 14 der Umgebung U reflektiert und nach Rückumlenkung über die Spiegelpyramide 2 im Laserempfänger 16 zu einem Empfangszeitpunkt $t_{E,n}$ empfangen werden. Aus der Laufzeit $\Delta T_n = t_{E,n} - t_{S,n}$ eines Impulses kann dann anhand der bekannten Beziehung

$$D_n = c \cdot \Delta T_n / 2 = c \cdot (t_{S,n} - t_{E,n}) / 2, \qquad (1)$$

mit

$t_{S,n}$ ... Sendezeitpunkt des Sende-Laserimpulses $S_n$,
$t_{E,n}$ ... Empfangszeitpunkt des Empfangs-Laserimpulses $E_n$, und
c ......... Lichtgeschwindigkeit.

die Zielentfernung $D_n$ des Laserscanners 1 in der jeweiligen Senderichtung zum Abtastpunkt $U_n$ der Umgebung U bestimmt werden.

Fig. 2 zeigt den Laserscanner 1 von Fig. 1 - zweidimensional schematisch vereinfacht - eingebaut in ein Gehäuse 23 als Träger aller Komponenten des Laserscanners 1. Für den Durchtritt der Sende- und Empfangsstrahlen 12, 15 besitzt das Gehäuse 23 ein Fenster 24 aus transparentem Material, z.B. Kunststoff oder Glas. Das Fenster 24 könnte beispielsweise eine gro-βe plane Glasscheibe sein oder Zylindersegmentform haben oder aus mehreren planen, zueinander abgewinkelten Abschnitten 25, 26, 27 zusammengesetzt, beispielsweise zusammengeklebt.

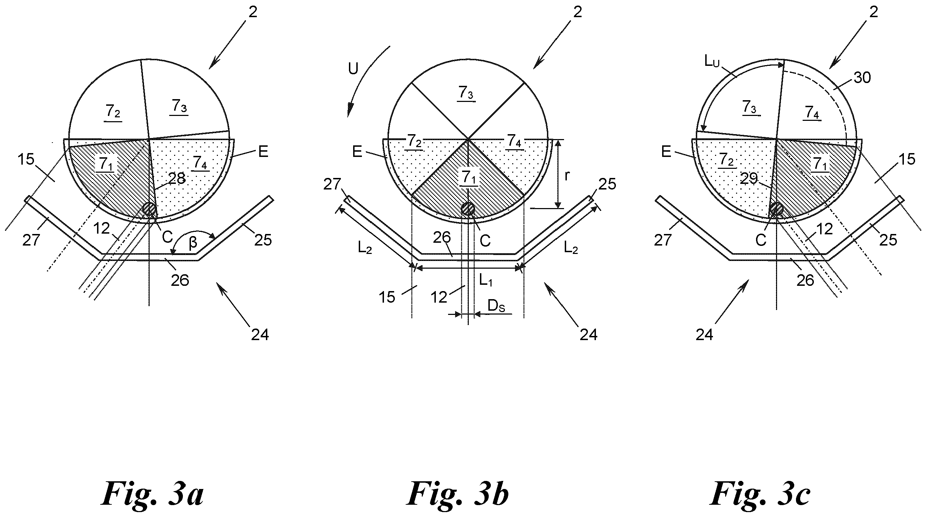

In den Fig. 3a - 3c sind drei Drehstellungen einer "aktiven" Spiegelfacette $7_i$, das ist jeweils jene Spiegelfacette $7_i$, welche gerade vom Sendestrahl 12 getroffen wird, hier die Spiegelfacette $7_1$ (dünn schraffiert), bezüglich des Auftreffpunktes C (der "Sendeapertur", dick schraffiert) des Sendestrahls 12 des Lasersenders 11 und der Empfangsapertur E (punktiert) des Laserempfängers 16 gezeigt, und zwar:

- in Fig. 3a jene Winkelstellung der aktiven Spiegelfacette $7_1$, in welcher der Auftreffpunkt C die Kante 28 zwischen Spiegelfacette $7_4$ und aktiver Spiegelfacette $7_1$ gerade überschritten hat und somit zur Gänze auf der aktiven Spiegelfacette $7_1$ liegt;
- in Fig. 3b die Mittelstellung, in welcher die aktive Spiegelfacette $7_1$ soweit verdreht wurde, dass der Auftreffpunkt C in Umfangsrichtung U gesehen in der Mitte der aktiven Spiegelfacette $7_1$ liegt; und

- in Fig. 3c jene Stellung, in welcher der Auftreffpunkt C gerade noch zur Gänze auf der aktiven Spiegelfacette $7_1$ liegt, d.h. gerade bevor sie die Kante 29 zwischen der aktiven Spiegelfacette $7_1$ und der angrenzenden Spielfacette $7_2$ überschreitet und damit diese dann "aktiv" macht.

Wie ersichtlich ist der Lasersender 11 auf den Randbereich 30 der Spiegelpyramide 2 gerichtet, d.h. der Radialabstand r seines Auftreffpunktes C bezüglich der Drehachse 5 ist so weit maximiert, dass der Auftreffpunkt C in Radialrichtung gerade noch auf der jeweils aktiven Spiegelfacette $7_1$ liegt. Ferner sollte der Durchmesser $D_S$ des Auftreffpunkts C möglichst klein im Verhältnis zur Umfangserstreckung $L_U$ der aktiven Spiegelfacette $7_1$ im Randbereich 30 sein. Beispielsweise ist der Durchmesser $D_S$ des Auftreffpunkts C kleiner als ein Viertel, insbesondere kleiner als ein Achtel, der Umfangserstreckung $L_U$ der jeweils aktiven Spiegelfacette $7_1$ in deren Randbereich 30.

Gemäß den Fig. 3a - 3c ist die Empfangsapertur E (punktiert) des Laserempfängers 16 etwa so groß wie das Doppelte einer der Spiegelfacetten $7_i$ (dünn schraffiert) in Richtung der Drehachse 5 gesehen, d.h. jeweils in einer Projektion in Richtung der Drehachse 5 auf eine zur Drehachse 5 normale Projektionsebene (hier: die Zeichnungsebene). Da die Spiegelfacetten $7_i$ der Spiegelpyramide 2 unterschiedliche Neigungen $\alpha_i$ haben, um verschiedene Abtastfächer $13_j$ zu erzeugen, sind sie in Richtung der Drehachse 5 betrachtet in der Regel unterschiedlich groß. In diesem Fall ist die Empfangsapertur E des Laserempfängers 16 bevorzugt etwa so groß wie das Doppelte der größten aller in Richtung der Drehachse 5 betrachteten Spiegelfacetten $7_i$.

Durch die Verwendung einer derart großen Empfangsapertur E kann der Laserempfänger 16 in jeder der in den Fig. 3a - 3c gezeigten Stellungen der Spiegelpyramide 2 jeweils die gesamten von einer aktiven Spiegelfacette, wie hier der Spiegelfacette $7_1$, zurückempfangenen und umgelenkten Empfangsstrahlen 15 ausnützen und empfangen.

Grundsätzlich könnte die Empfangsapertur E (in Richtung der Drehachse 5 betrachtet) auch größer als das Doppelte der größten Spiegelfacette $7_i$ sein, also beispielsweise die gesamte Spiegelpyramide 2 abdecken, d.h. die Blende 22 entfallen. Dadurch wird die Empfangsempfindlichkeit des Laserscanners 1 jedoch nicht weiter erhöht, denn nur Empfangsstrahlen 15, die jeweils die aktive Spiegelfacette $7_i$ treffen und aus der interessierenden Aussenderichtung des Sendestrahls 12 einfallen, sind Nutzstrahlen.

Hingegen könnte die Empfangsapertur E auch in einem Bereich zwischen dem Einfachen der in Richtung der Drehachse 5 betrachteten Fläche einer Spiegelfacette $7_i$ (insbesondere der größten derselben) und dem genannten Doppelten liegen, mit entsprechender Verringerung der Empfangsempfindlichkeit des Laserscanners 1 nahe den Endstellungen der Fig. 3a und 3c.

In dem Beispiel der Fig. 4 und 5 hat die Spiegelpyramide 2 fünf Spiegelfacetten $7_i$, $7_2$, $7_3$, $7_4$ und $7_5$, d.h. I = 5, und ist an ihrer Deckfläche 9 beschnitten ("stumpf"), und zwar parallel zu ihrer Bodenfläche 10. Jede der Spiegelfacetten $7_i$ ist unter einem anderen Winkel $\alpha_i$ gegenüber der Drehachse 5 geneigt, beispielsweise $\alpha_1 = 45°$, $\alpha_2 = 45° + 10°$, $\alpha_3 = 45° + 5°$, $\alpha_4 = 45° - 5°$, $\alpha_5 = 45° - 10°$. Damit können fünf Abtastfächer $13_j$ (J = 5) ausgesandt werden.

Die Spiegelfacetten $7_i$ werden nun so mit ihren jeweils vorgegebenen Neigungen $\alpha_i$ rund um die Drehachse 5 angeordnet, dass der Auftreffpunkt C des Sendestrahls 12 auf jeder Spiegelfacette $7_i$ bei Drehung der Spiegelpyramide 2 um die Drehachse 5 einen Bogen $b_i$ beschreibt, dessen Bogenwinkel $\delta_i$ für jede Spiegelfacette $7_i$ etwa gleich groß ist. Damit wird erreicht, dass die Abtastfächer $13_j$ jeweils einen gleichen Fächerwinkel $\beta_j$ haben.

Da die Spiegelfacetten $7_i$ jeweils eine vorgegebene Neigung $\alpha_i$ haben, ergibt sich die Form der Spiegelpyramide 2 daraus, dass die Ebene, in der die jeweilige Spiegelfacette $7_i$ liegt, durch die beiden Endpunkte $A_i$ und $B_i$ des Bogens $b_i$, auf dem sich der Auftreffpunkt C bewegt, gehen und diese Ebene den Winkel $\alpha_i$ gegenüber der Drehachse 5 einnimmt. Wenn die Spiegelfacetten $7_i$ an ihrer Unterseite von einer z.B. normal zur Drehachse 5 verlaufenden Bodenfläche 10 begrenzt und an ihrer Oberseite von einer z.B. parallel dazu verlaufenden Deckfläche 9 begrenzt sind, dann ergibt sich die in Fig. 5 im Schnitt gezeigte Pyramidenstumpfform, wobei die Deckfläche 9 ein unregelmäßiges Fünfeck bildet, das in der Regel außermittig zur Drehachse 5 liegt, und die Bodenfläche 10 ebenso, soferne nicht gerade der gesamte untere Bereich 8 der Spiegelpyramide 2 wie in Fig. 1 gezeigt kreisförmig beschnitten ist; in diesem Fall ist die Bodenfläche 10 kreisförmig, wie auch in Fig. 4 gezeigt.

Es versteht sich, dass die Deck- und Bodenflächen 9, 10 auch nicht-parallel und auch nicht-normal zur Drehachse 5 sein können. Auch die Beschneidung an der Spitze, d.h. die Deckfläche 9, kann entfallen, sodass die Spiegelpyramide 2 "spitz" ist.

Wie in Fig. 5 gezeigt, kann die Spiegelpyramide als Hohlpyramide ausgeführt sein, d.h. mit einem hohlen Innenraum 31, und jede Spiegelfacette $7_i$ hat dann eine ihr zugeordnete Wandstärke $W_i$. Der Boden einer solchen Hohlpyramide könnte entfallen und die Welle 3 beispielsweise nur an der Deckfläche 9 oder den sich schneidenden Spiegelfacetten $7_i$ angreifen.

Um die Spiegelpyramide 2 dynamisch um die Drehachse 5 auszuwuchten, können die Wandstärken $W_i$ der Spiegelfacetten $7_i$ entsprechend variiert werden, um die Masseverteilung der Spiegelpyramide 2 rund um die Drehachse 5 zu symmetrieren. Wenn die Spiegelpyramide 2 beispielsweise mittels 3D-Druckens eines sinterbaren Materials gefertigt wird, das anschließend gesintert und zur Bildung der Spiegelfacetten $7_i$ geschliffen und poliert wird, können die Spiegelfacetten $7_i$ gleich in ihrer jeweiligen Wandstärke $W_i$ 3D-gedruckt werden, wie später noch ausführlicher erläutert.

Die Empfangsempfindlichkeit des Laserscanners 1 über die jeweilige aktive Spiegelfacette $7_i$ (dünn schraffiert in den Fig. 3a - 3c) wird nicht nur durch die Empfangsapertur E des Laserempfängers 16 definiert, sondern - bei der hier vorliegenden Spiegelpyramide 2 mit unterschiedlich geneigten und daher in der Regel unterschiedlich großen Spiegelfacetten $7_i$ - auch durch die Empfangsfläche $AR_i$ der jeweils aktiven Spiegelfacette $7_i$. Die Empfangsfläche $AR_i$ einer Spiegelfacette $7_i$ ist dabei jene Fläche, welche ein von einem Umgebungspunkt $U_n$ kommender Empfangsstrahl 15 "sieht". Da der Empfangsstrahl 5 aus genau der Gegenrichtung kommt, aus der der Sendestrahl 12 von der aktiven Spiegelfacette $7_i$ ausgesandt wurde, ist die Empfangsfläche $AR_i$ damit die in Richtung (oder Gegenrichtung, dies ist Dasselbe) des über die Spiegelfacette $7_i$ ausgesandten Sendestrahls 12 projizierte Fläche (Oberfläche) der Spiegelfacette $7_i$. Da sich jedoch die Aussenderichtung des Sendestrahls 12 während der Drehung der Spiegelpyramide 2 fortschreitend über den Fächerwinkel β ändert, "sieht" der Empfangsstrahl 15 auch jeweils eine - gemäß dem Richtungscosinus des jeweiligen Blickwinkels des Empfangsstrahls 15 auf die passierende Spiegelfacette $7_i$ - entsprechend variierende Empfangsfläche $AR_i$ der aktiven Spiegelfacette $7_i$. Die maximale, für den Empfangsstrahl 15 "sichtbare" Empfangsfläche $AR_i$ einer Spiegelfacette $7_i$ ist dabei die in Richtung jenes Sendestrahls 12 projizierte (Ober-) Fläche der Spiegelfacette $7_i$, dessen der Auftreffpunkt C gerade in der Mitte des Bogenwinkels $δ_i$ liegt (soferne der Sendestrahl 12 in einer die Drehachse 5 enthaltenden Ebene auf die Spiegelpyramide 2 ausgesandt wird; andernfalls ist die Empfangsfläche $AR_i$ entsprechend angepasst zu berechnen).

Die maximale, für den Empfangsstrahl 15 "sichtbare" Empfangsfläche $AR_i$ einer Spiegelfacette $7_i$ bestimmt gleichzeitig die maximale Empfangsempfindlichkeit des Laserscanners 1 im Abtastfächer $13_{j=i}$. Um die Empfangsempfindlichkeiten der verschiedenen, divergierenden Abtastfächer $13_j$ untereinander zu vergleichmäßigen und dadurch eine Übersteuerung des Laserempfängers 16 zu verhindern, werden die Empfangsflächen $AR_i$ der Spiegelfacetten $7_i$ und damit die geometrische Form der Spiegelpyramide 2 wie folgt optimiert.

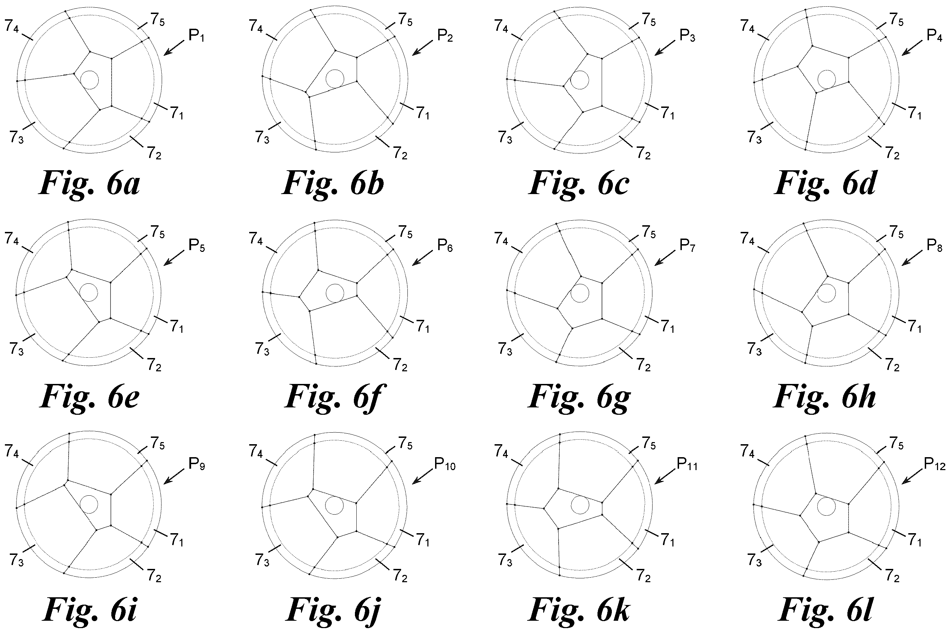

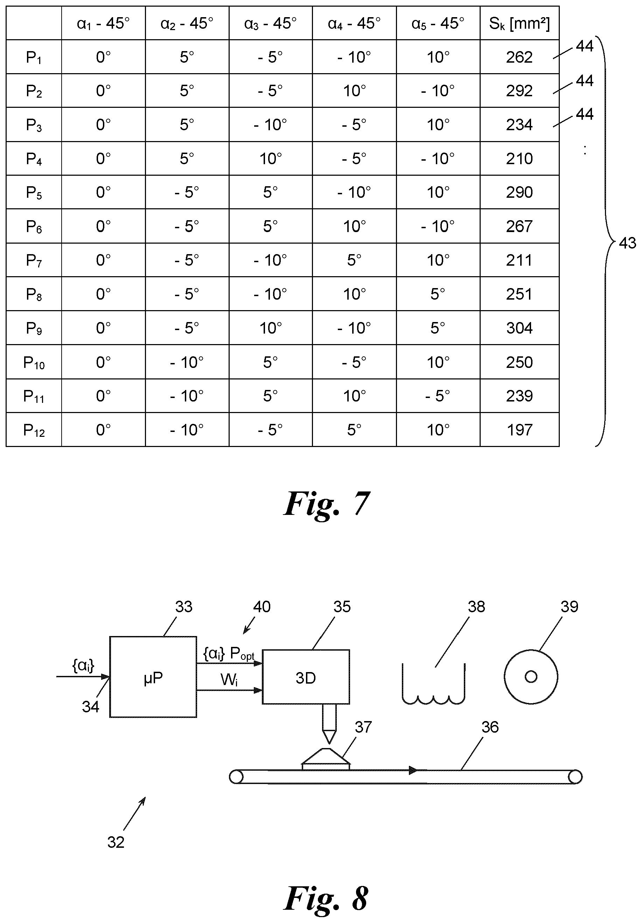

Die Abfolge der Spiegelpyramiden $7_i$ rund um die Drehachse 5 wird dazu als Designparameter herangezogen. Die Fig. 6a bis 6l zeigen zwölf verschiedene Permutationen $P_k$ (k = 1 ... K, K = 12) von Abfolgen der Spiegelfacetten $7_i$ rund um die Drehachse 5 für die fünffacettige Spiegelpyramide 2 von Fig. 4, wenn jede Spiegelfacette $7_i$ eine andere Neigung $α_i$ hat, wie in der Tabelle von Fig. 7 angeführt. Die Anzahl K an möglichen Permutationen $P_k$ ist wegen der Drehbarkeit der Spiegelpyramide I!/I = (I - 1)!. Da es überdies meist egal ist, ob die Spiegelpyramide 2 im Uhrzeigersinn oder gegen den Uhrzeigersinn gedreht wird, ist die Anzahl K an praktisch nützlichen Permutationen (I - 1)!/2. Sollten manche der Spiegelfacetten $7_i$ dieselbe Neigung $α_i$ haben, reduziert sich die Anzahl K an praktisch unterschiedlichen Permutationen $P_k$ entsprechend.

Jede der möglichen Abfolgen $P_k$, die durch entsprechendes Permutieren der Spiegelfacetten $7_i$ in ihrer Abfolge rund um die Drehachse 5 erhaltbar sind, führt unter den Prämissen, dass die Spiegelfacetten $7_i$ vorgegebene Neigungen $α_i$ haben, dass der Auftreffpunkt C auf jeder Spiegelfacette $7_i$ einen gleich großen Bogenwinkel $δ_i$ überstreicht und dass somit jede Spiegelfacette $7_i$ durch die Endpunkte $A_i$ und $B_i$ des jeweiligen Bogens $b_i$ geht, zu einer anders geformten Spiegelpyramide 2. Denn andere Abfolgen $P_k$ führen zu anderen Schnittlinien $S1_i$ und $S2_i$ einer Spiegelfacette $7_i$ mit ihren benachbarten Spiegelfacetten $7_{i-1}$, $7_{i+1}$ und damit zu einer anderen Oberfläche und damit letztlich Empfangsfläche $AR_i$ dieser Spiegelfacette $7_i$.

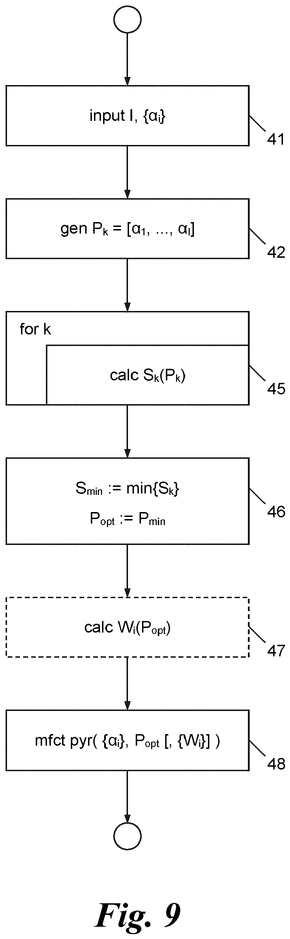

Durch Ermitteln jener Permutation bzw. Abfolge $P_k$, bei der die Empfangsflächen $AR_i$ der Spiegelfacetten $7_i$ untereinander am wenigsten streuen, d.h. am wenigsten voneinander abweichen, kann die optimierte Form der Spiegelpyramide 2 aufgefunden werden, bei der der Laserscanner 1 in seinen verschiedenen, durch die Abtastfächer $13_j$ gebildeten Empfangskanälen eine möglichst gleichmäßige Empfangsempfindlichkeit und damit Übersteuerungssicherheit hat. Fig. 9 zeigt die dazu durchgeführten Schritte eines Verfahrens zur Herstellung einer auf diese Weise optimierten Spiegelpyramide 2 in Form eines Flussdiagramms und Fig. 8 eine dafür geeignete Vorrichtung 32 zur Herstellung der Spiegelpyramide 2.

Gemäß Fig. 8 umfasst die Vorrichtung 32 zur Herstellung der Spiegelpyramide 2 einen Computer 33, dem die gewünschte Anzahl I an Spiegelfacetten $7_i$ und deren jeweilige gewünschte Neigungen $α_i$ an einem Eingang 34 vorgegeben werden. Der Computer 33 steuert einen 3D-Drucker 35, der aushärtbares, beispielsweise sinterbares, Material auf einen Förderer 36 ablagert, um einen Rohling 37 für die Spiegelpyramide 2 aufzubauen. Der Rohling 37 der Spiegelpyramide 2 wird vom Förderer 36 in eine Aushärtstation 38, z.B. einen Ofen, eine UV-Bestrahlungsanlage od.dgl. verbracht, dort ausgehärtet oder gesintert, und dann werden in einer Schleif- und Polierstation 39 die Oberflächen der Pyramidenseiten zu den Spiegelfacetten $7_i$ geschliffen und poliert. Es versteht sich, dass der 3D-Drucker 35 die Spiegelpyramide 2 auch auf andere Weise formen könnte, z.B. durch Fräsen und Schleifen aus einem Vollblock, d.h. der 3D-Drucker 35 ist dann beispielsweise eine CNC-Fräsmaschine.

Der Computer 33 berechnet nach dem anschließend unter Bezugnahme auf Fig. 9 beschriebene Verfahren die optimale Abfolge (Permutation) $P_{opt}$ der Spiegelfacetten $7_i$ mit den vorgegebenen Neigungen $α_i$ und (optional) die Wandstärken $W_i$ der Spiegelfacetten $7_i$ und steuert mit diesen Daten den 3D-Drucker 35 über eine Schnittstelle 40. Es versteht sich, dass die Schnittstelle 40 eine Offline-Schnittstelle sein könnte, also der Computer 33 die Steuerdaten für den 3D-Drucker 35 auf einem Datenträger speichern könnte, der dann zum 3D-Drucker 35 verbracht und von diesem eingelesen wird. In der Regel ist jedoch der 3D-Drucker 35 direkt ("online") an den Ausgang des Computers 33 angeschlossen. Die Schnittstelle 40 zwischen Computer 33 und 3D-Drucker 35 kann auch noch weitere für die Fertigung der Spiegelpyramide 2 notwendige Verfahrensparameter führen, wie die absoluten Abmessungen (Höhe, Durchmesser usw.) der Spiegelpyramide 2, die Daten der Deck- und Bodenflächen 9, 10, Daten für Montageöffnungen, -stutzen oder -lager zur Montage der Spiegelpyramide 2 an der Welle 3, usw.

Unter Bezugnahme auf Fig. 9 werden zur Herstellung der Spiegelpyramide 2 in einem ersten Schritt 41 die Anzahl I der zu fertigenden Spiegelfacetten $7_i$ und deren gewünschte Neigungen $\alpha_i$ vorgegeben, z.B. in den Eingang 34 des Computers 33 eingespeist.

In einem darauffolgenden Schritt 42 erzeugt nun der Computer 33 eine Gruppe 43 (Fig. 7) von Datensätzen 44, von denen jeder eine andere mögliche Abfolge (Permutation) $P_k$ der Spiegelfacetten $7_i$ rund um die Drehachse 5 repräsentiert, also beispielsweise die erste Abfolge $P_1$ von Fig. 6a, die zweite Abfolge $P_2$ von Fig. 6b, die dritte Abfolge $P_3$ von Fig. 6c, usw. Im gezeigten Beispiel wird für jede in der Tabelle von Fig. 7 gezeigte Permutation $P_k$ (k = 1 ... K) ein Datensatz 44 erzeugt. Wenn alle Neigungen $\alpha_i$ voneinander verschieden sind, gibt es K = (I - 1)! Permutationen $P_k$; bei Berücksichtigung der faktischen Gleichwertigkeit von im Uhrzeigersinn und gegen den Uhrzeigersinn drehenden Spiegelpyramiden K = (I -1)!/2 Permutationen $P_k$; und entsprechend weniger, wenn einzelne der Neigungen $\alpha_i$ untereinander gleich sind.

In einem anschließenden Schritt 45 wird nun für jede Permutation $P_k$, d.h. für jeden Datensatz 44, ein Streuungsmaß $S_k$ der Empfangsflächen $AR_i$ aller Spiegelfacetten $7_i$ dieser Permutation $P_k$ berechnet. Die dabei jeweils betrachtete Empfangsfläche $AR_i$ einer Spiegelfacette $7_i$ ist, wie oben erläutert, die in Richtung des von der Spiegelpyramide 2 abgehenden Sendestrahls 12 projizierte Fläche (Oberfläche) der Spiegelfacette $7_i$, wenn der Auftreffpunkt C des Sendestrahls 12 sich z.B. aktuell in der Mitte $M_i$ des Bogenwinkels $\delta_i$ der Spiegelfacette $7_i$ befindet. Alternativ könnte statt der Mitte $M_i$ auch ein anderer Teilungspunkt des Bogenwinkels $\delta_i$ betrachtet werden, z.B. bei einem Drittel der Bogenlänge $b_i$, einem Viertel od.dgl.

Für das Streuungsmaß $S_k$ kann jedes in der Technik bekannte Streuungsmaß verwendet werden, welches ein Maß für die gegenseitigen Abweichungen der Empfangsflächen $AR_i$ der Spiegelfacetten $7_i$ ist, z.B. deren Varianz, Standardabweichung, mittlere absolute Abweichung vom Mittelwert, Spannweite zwischen Minimal- und Maximalwert, od.dgl.

Es versteht sich, dass die Schritte 42 und 45 auch kombiniert werden könnten, d.h. sofort mit der Erzeugung einer Permutation $P_k$ auch jeweils deren Steuerungsmaß $S_k$ berechnet werden könnte.

Anschließend wird in einem Schritt 46 der Datensatz 44 bzw. $P_k$ mit dem minimalen Streuungsmaß $S_k$ ausgewählt, d.h. der Index min = k des minimalen Streuungsmaßes $S_k$ aller Streuungsmaße $\{S_k\}$ ist gleichzeitig der Index opt = min der Permutation $P_{opt}$, welche die optimale Abfolge der Spiegelfacetten $7_i$ rund um die Drehachse 5 repräsentiert.

In einem anschließenden (optionalen) Schritt 47 kann nun zusätzlich für jede Spiegelfacette $7_i$ - in der ausgewählten optimalen Abfolge $P_{opt}$ - eine Wandstärke $W_i$ berechnet werden, die zu einer dynamischen Auswuchtung der Spiegelpyramide 2 bei ihrer Drehung um Drehachse 5 führt. In der Regel ergeben sich unterschiedliche Wandstärken $W_i$ für die einzelnen Spiegelfacetten $7_i$, und die Wandstärke $W_i$ könnte auch über die Flächenerstreckung einer Spiegelfacette $7_i$ variieren, d.h. eine Spiegelfacette $7_i$ könnte auch eine z.B. keilförmige Wandstärke haben.

Anschließend wird im Schritt 48 die Spiegelpyramide 2 mit den im Schritt 46 (und optional Schritt 47) erzeugten Daten $\{\alpha_i\}$, $P_{opt}$ und optional $\{W_i\}$ hergestellt, z.B. mittels des 3D-Druckers 35 und seiner (optionalen) nachgeordneten Bearbeitungsstationen 38, 39. Die Ausgangsdaten der Schritte 46 und 47 werden dazu dem 3D-Drucker 34 über die Schnittstelle 40 zugeführt.

Die Erfindung ist nicht auf die dargestellten Ausführungsformen beschränkt, sondern umfasst alle Varianten, Modifikationen und deren Kombinationen, die unter den Gegenstand der angeschlossen Ansprüche fallen.

## Patentansprüche

**1.** Spiegelpyramide mit einer Drehachse (5) für einen Laserscanner (1), bei dessen Betrieb ein Sendestrahl (12) nicht-normal zur Drehachse (5) auf die sich drehende Spiegelpyramide (2) auftrifft,

welche Spiegelpyramide (2) gegenüber der Drehachse (5) unter jeweils einer vorgegebenen Neigung ($\alpha_i$) geneigte Pyramidenseiten hat, die jeweils eine Spiegelfacette ($7_i$) bilden, wobei zumindest zwei Spiegelfacetten ($7_i$) unterschiedliche Neigungen ($\alpha_i$) haben,
wobei die Spiegelpyramide (2) so ausgebildet ist, dass im Betrieb des Laserscanners (1) der Auftreffpunkt (C) des Sendestrahls (12) vom Lasersender (11) auf die Spiegelpyramide (2) in Drehachsenrichtung gesehen auf jeder Spiegelfacette ($7_i$) einen gleich großen Bogenwinkel ($\delta_i$) überstreicht,
wobei die Spiegelpyramide (2) zumindest vier Spiegelfacetten ($7_i$) hat,
**dadurch gekennzeichnet,**
**dass** unter allen durch Permutieren erhaltbaren Abfolgen ($P_k$) von Spiegelfacetten ($7_i$) rund um die Drehachse

(5) jene Abfolge ($P_{opt}$) gewählt ist, bei der sich eine minimale Streuung ($S_{min}$) der Empfangsflächen ($AR_i$) aller Spiegelfacetten ($7_i$) ergibt, wobei als Empfangsfläche ($AR_i$) einer Spiegelfacette ($7_i$) ihre in Richtung eines von ihr reflektierten Sendestrahls (12) projizierte Fläche gilt, dessen Auftreffpunkt (C) in der Mitte des genannten Bogenwinkels ($\delta_i$) liegt.

2. Spiegelpyramide nach Anspruch 1, **dadurch gekennzeichnet, dass** alle Spiegelfacetten ($7_i$) unterschiedliche Neigungen ($\alpha_i$) haben.

3. Spiegelpyramide nach Anspruch 1 oder 2, **dadurch gekennzeichnet, dass** die Spiegelpyramide (2) zumindest fünf Spiegelfacetten ($7_i$) hat.

4. Spiegelpyramide nach einem der Ansprüche 1 bis 3, **dadurch gekennzeichnet, dass** die Spiegelpyramide (2) eine Hohlpyramide ist, bei der jede Spiegelfacette ($7_i$) eine individuelle Wandstärke ($W_i$) hat, wobei die Wandstärken ($W_i$) der Spiegelfacetten ($7_i$) so gewählt sind, dass die Spiegelpyramide (2) um die Drehachse (5) dynamisch ausgewuchtet ist.

5. Spiegelpyramide nach einem der Ansprüche 1 bis 4, **dadurch gekennzeichnet, dass** sie aus einem 3D-gedruckten Sintermaterial gefertigt ist.

6. Laserscanner zum Scannen einer Umgebung, umfassend

   einen Träger (23),
   einen vom Träger (23) getragenen Lasersender (11) zum Aussenden eines Sendestrahls (12),
   einen vom Träger (23) getragenen Laserempfänger (16) zum Empfangen des an der Umgebung (U) reflektierten Sendestrahls (12) als Empfangsstrahl (15), und
   eine im Strahlengang des Sende- und des Empfangsstrahls (12, 15) angeordnete, auf dem Träger (23) um eine Drehachse (5) drehbar gelagerte Spiegelpyramide (2) nach einem der Ansprüche 1 bis 5.

7. Laserscanner nach Anspruch 6, **dadurch gekennzeichnet, dass** der Sendestrahl (12) im Betrieb des Laserscanners (1) parallel zur Drehachse (5) auf die Spiegelpyramide (2) auftrifft.

8. Verfahren zum Herstellen einer Spiegelpyramide (2) mit einer Drehachse (5) für einen Laserscanner (1), bei dessen Betrieb ein Sendestrahl (12) nicht-normal zur Drehachse (5) auf die sich drehende Spiegelpyramide (2) auftrifft, welche Spiegelpyramide (2) zumindest vier gegenüber der Drehachse (5) unter jeweils einer vorgegebenen Neigung ($\alpha_i$) geneigte Pyramidenseiten hat, die jeweils eine Spiegelfacette ($7_i$) bilden, wobei zumindest zwei Spiegelfacetten ($7_i$) unterschiedliche Neigungen ($\alpha_i$) haben, umfassend:

   in einem Computer (33), Erzeugen (42) einer Gruppe (43) von Datensätzen (44), von denen jeder eine andere, durch Permutieren erhaltbare Abfolge ($P_k$) von Spiegelfacetten ($7_i$) rund um die Drehachse (5) repräsentiert, wobei in jeder Abfolge ($P_k$) die Spiegelpyramide (2) so ausgebildet ist, dass im Betrieb des Laserscanners (1) der Auftreffpunkt (C) des Sendestrahls (12) auf der Spiegelpyramide (2) in Drehachsenrichtung gesehen auf jeder Spiegelfacette ($7_i$) einen gleich großen Bogenwinkel ($\delta_i$) überstreicht;
   während oder nach dem Erzeugen (42), für jeden Datensatz (44), im Computer (33): Berechnen (45) einer Streuung ($S_k$) der Empfangsflächen ($AR_i$) aller Spiegelfacetten ($7_i$), wobei als Empfangsfläche ($AR_i$) einer Spiegelfacette ($7_i$) ihre in Richtung eines von ihr reflektierten Sendestrahls (12) projizierte Fläche gilt, dessen Auftreffpunkt (C) in der Mitte des genannten Bogenwinkels ($\delta_i$) liegt;
   im Computer (33), Auswählen (46) des Datensatzes (44) mit der minimalen Streuung ($S_{min}$) ; und
   Herstellen (48) der Spiegelpyramide (2) mit der vom ausgewählten Datensatz (44) repräsentierten Abfolge ($P_{opt}$) von Spiegelfacetten ($S_k$) jeweils vorgegebener Neigung ($\alpha_k$).

9. Verfahren nach Anspruch 8, **dadurch gekennzeichnet, dass** das Herstellen (48) mit Hilfe eines 3D-Druckers (35) erfolgt, dem der ausgewählte Datensatz (44) vom Computer (33) zugeführt wird.

10. Verfahren nach Anspruch 9, **dadurch gekennzeichnet, dass** die Spiegelpyramide (2) eine Hohlpyramide ist und jede Spiegelfacette ($7_i$) vom 3D-Drucker (35) mit einer individuellen Wandstärke ($W_i$) gedruckt wird, wobei die Wandstärken ($W_i$) vom Computer (33) so berechnet und dem 3D-Drucker (35) zugeführt werden, dass die hergestellte Spiegelpyramide (2) um die Drehachse (5) dynamisch ausgewuchtet ist.

**Claims**

1. Mirror pyramid with an axis of rotation(5) for a laser scanner (1), during operation of which a transmission beam (12) hits the rotating mirror pyramid (2) at a non-normal angle to the axis of rotation(5),

    which mirror pyramid (2) has pyramid faces that are inclined, each at a respective predetermined inclination ($\alpha_i$) relative to the axis of rotation(5), and respectively form a mirror facet ($7_i$), wherein at least two mirror facets ($7_i$) have different inclinations ($\alpha_i$),
    wherein the mirror pyramid (2) is configured in such a manner that, during operation of the laser scanner (1), the hit point (C) of the transmission beam (12) from the laser transmitter (11) on the mirror pyramid (2) sweeps over an equally large arc angle ($\delta_i$) on each mirror facet ($7_i$) when viewed in a direction of the axis of rotation, wherein the mirror pyramid (2) has at least four mirror facets ($7_i$),
    **characterized in that**
    from all sequences ($P_k$) of mirror facets ($7_i$) around the axis of rotation (5) obtainable by permutation that sequence ($P_{opt}$) is chosen in which a minimal dispersion ($S_{min}$) of the receiving areas ($AR_i$) of all mirror facets ($7_i$) is obtained, wherein the receiving area ($AR_i$) of a mirror facet ($7_i$) is considered as its area projected in the direction of a transmission beam (12) reflected therefrom, the hit point (C) of which lies in the centre of said arc angle ($\delta_i$).

2. Mirror pyramid according to claim 1, **characterized in that** all mirror facets ($7_i$) have different inclinations ($\alpha_i$).

3. Mirror pyramid according to claim 1 or 2, **characterized in that** the mirror pyramid (2) has at least five mirror facets ($7_i$).

4. Mirror pyramid according to any one of claims 1 to 3, **characterized in that** the mirror pyramid (2) is a hollow pyramid, in which each mirror facet ($7_i$) has an individual wall thickness ($W_i$), wherein the wall thicknesses ($W_i$) of the mirror facets ($7_i$) are chosen such that the mirror pyramid (2) is dynamically balanced around the axis of rotation (5).

5. Mirror pyramid according to any one of claims 1 to 4, **characterized in that** it is made of a 3D-printed sinter material.

6. Laser scanner for scanning an environment, comprising:

    a carrier (23),
    a laser transmitter (11) supported by the carrier (23) for transmitting a transmission beam (12),
    a laser receiver (16) supported by the carrier (23) for receiving the transmission beam (12) reflected by the environment (U) as a receiving beam (15), and
    a mirror pyramid (2) according to one of claims 1 to 5, arranged in the beam path of the transmission and the receiving beam (12, 15) and rotatably mounted on the carrier (23) for rotating about an axis of rotation(5).

7. Laser scanner according to claim 6, **characterized in that** the transmission beam (12) hits the mirror pyramid (2) parallel to the axis of rotation (5) during operation of the laser scanner (1).

8. Method for producing a mirror pyramid (2) with an axis of rotation (5) for a laser scanner (1), during operation of which a transmission beam (12) hits the rotating mirror pyramid (2) at a non-normal angle to the axis of rotation (5), which mirror pyramid (2) has at least four pyramid faces that are inclined, each at a respective predetermined angle ($\alpha_i$) relative to the axis of rotation (5), and respectively form a mirror facet ($7_i$), wherein at least two mirror facets ($7_i$) have different inclinations ($\alpha_i$), comprising:

    in a computer (33), generating (42) a group (43) of data sets (44), each representing a different sequence ($P_k$) of mirror facets ($7_i$) around the axis of rotation (5) obtainable by permutation, wherein in each sequence ($P_k$) the mirror pyramid (2) is configured such that during operation of the laser scanner (1), the hit point (C) of the transmission beam (12) on the mirror pyramid (2) sweeps over an equally large arc angle ($\delta_i$) on each mirror facet ($7_i$) when viewed in the direction of the rotational axis;
    during or after generating (42), for each data set (44), in the computer (33): calculating (45) a dispersion ($S_k$) of the receiving areas ($AR_i$) of all mirror facets ($7_i$), wherein the receiving area ($AR_i$) of a mirror facet ($7_i$) is considered as its area projected in the direction of a transmission beam (12) reflected therefrom, the hit point (C) of which lies in the centre of said arc angle ($\delta_i$);
    in the computer (33), selecting (46) the data set (44) with the minimal dispersion ($S_{min}$); and
    producing (48) the mirror pyramid (2) with the sequence ($P_{opt}$) of mirror facets ($S_k$) of respective predetermined

inclination ($\alpha_k$) represented by the selected data set (44).

9. Method according to claim 8, **characterized in that** the producing (48) is carried out by means of a 3D printer (35), to which the selected data set (44) is fed from the computer (33).

10. Method according to claim 9, **characterized in that** the mirror pyramid (2) is a hollow pyramid and each mirror facet ($7_i$) is printed by the 3D printer (35) with an individual wall thickness ($W_i$), wherein the wall thicknesses ($W_i$) are calculated by the computer (33) and fed to the 3D printer (35) in such a manner that the produced mirror pyramid (2) is dynamically balanced around the axis of rotation (5).

**Revendications**

1. Pyramide à miroirs pourvue d'un axe de rotation (5) pour un balayeur laser (1), pendant le fonctionnement duquel un faisceau d'émission (12) frappe de manière non normale par rapport à l'axe de rotation (5) sur la pyramide à miroirs (2) en rotation,

laquelle pyramide à miroirs (2) a des côtés de pyramide respectivement inclinés avec une inclinaison ($\alpha_i$) prédéterminée par rapport à l'axe de rotation (5), qui forment chaque fois une facette de miroir ($7_i$), où au moins deux facettes de miroir ($7_i$) ont des inclinaisons ($\alpha_i$) différentes, où la pyramide à miroirs (2) est conçue de telle manière que, pendant le fonctionnement du balayeur laser (1), le point de frappe (C) du faisceau d'émission (12) de l'émetteur laser (11) sur la pyramide à miroirs (2), vu dans la direction de l'axe de rotation, parcourt sur chaque facette de miroir ($7_i$) un angle d'arc ($\delta_i$) de même valeur, où la pyramide à miroirs (2) a au moins quatre facettes de miroir ($7_i$), **caractérisée en ce que**, parmi toutes les séquences ($P_k$) de facettes de miroir ($7_i$) tout autour de l'axe de rotation (5) pouvant être obtenues par permutation, celle séquence ($P_{opt}$) est choisie, dans laquelle il en résulte une dispersion minimale ($S_{min}$) des surfaces de réception ($AR_i$) de toutes les facettes de miroir ($7_i$), où, en tant que surface de réception ($AR_i$) d'une facette de miroir ($7_i$) sa surface projetée en direction d'un faisceau d'émission (12) réfléchi par celle-ci est considérée, dont le point de frappe (C) se situe au milieu dudit angle d'arc ($\delta_i$).

2. Pyramide à miroirs selon la revendication 1, **caractérisée en ce que** toutes les facettes de miroir ($7_i$) ont des inclinaisons ($\alpha_i$) différentes.

3. Pyramide à miroirs selon la revendication 1 ou 2, **caractérisée en ce que** la pyramide à miroirs (2) a au moins cinq facettes de miroir ($7_i$).

4. Pyramide à miroirs selon l'une des revendications 1 à 3, **caractérisée en ce que** la pyramide à miroirs (2) est une pyramide creuse dans laquelle chaque facette de miroir ($7_i$) a une épaisseur de paroi ($W_i$) individuelle, où les épaisseurs de paroi ($W_i$) des facettes de miroir ($7_i$) sont choisies de telle manière que la pyramide à miroirs (2) est équilibrée dynamiquement autour de l'axe de rotation (5).

5. Pyramide à miroirs selon l'une des revendications 1 à 4, **caractérisée en ce qu'**elle est fabriquée à base d'un matériau fritté imprimé en 3D.

6. Balayeur laser pour le balayage d'un environnement, comprenant

un support (23), un émetteur laser (11) porté par le support (23) pour l'émission d'un faisceau d'émission (12), un récepteur laser (16) porté par le support (23) pour la réception du faisceau d'émission (12) réfléchi sur l'environnement (U) en tant que faisceau de réception (15), et une pyramide à miroirs (2) selon l'une des revendications 1 à 5, disposée dans le trajet de faisceau du faisceau d'émission et du faisceau de réception (12, 15), montée sur le support (23) de manière rotative autour d'un axe de rotation (5) .

7. Balayeur laser selon la revendication 6, **caractérisé en ce que** le faisceau d'émission (12) frappe la pyramide à miroirs (2) parallèlement par rapport à l'axe de rotation (5) pendant le fonctionnement du balayeur laser (1).

8. Procédé de fabrication d'une pyramide à miroirs (2) pourvue d'un axe de rotation (5) pour un balayeur laser (1), pendant le fonctionnement duquel un faisceau d'émission (12) frappe de manière non normale par rapport à l'axe de rotation (5) sur la pyramide à miroirs (2) en rotation, laquelle pyramide à miroirs (2) a au moins quatre côtés de pyramide respectivement inclinés avec une inclinaison ($\alpha_i$) prédéterminée par rapport à l'axe de rotation (5), qui forment chaque fois une facette de miroir ($7_i$), où au moins deux facettes de miroir ($7_i$) ont des inclinaisons ($\alpha_i$) différentes, comprenant :

> dans un ordinateur (33), la génération (42) d'un groupe (43) d'ensembles de données (44), dont chacun représente une autre séquence ($P_k$) de facettes de miroir ($7_i$) tout autour de l'axe de rotation (5) obtenue par permutation, où, dans chaque séquence ($P_k$), la pyramide à miroirs (2) est conçue de telle manière que, pendant le fonctionnement du balayeur laser (1), le point de frappe (C) du faisceau d'émission (12) sur la pyramide à miroirs (2), vu dans la direction de l'axe de rotation, parcourt sur chaque facette de miroir ($7_i$) un angle d'arc ($\delta_i$) de même valeur,
> pendant ou après la génération (42), pour chaque ensemble de données (44), dans l'ordinateur (33) : le calcul (45) d'une dispersion ($S_k$) des surfaces de réception ($AR_i$) de toutes les facettes de miroir ($7_i$), où, en tant que surface de réception ($AR_i$) d'une facette de miroir ($7_i$) sa surface projetée en direction d'un faisceau d'émission (12) réfléchi par celle-ci est considérée, dont le point de frappe (C) se situe au milieu dudit angle d'arc ($\delta_i$),
> dans l'ordinateur (33), la sélection (46) de l'ensemble de données (44) avec la dispersion minimale ($S_{min}$), et
> la fabrication (48) de la pyramide à miroirs (2) avec la séquence ($P_{opt}$) de facettes de miroir ($S_k$) d'inclinaison ($\alpha_k$) prédéterminée respective, représentée par l'ensemble de données (44) sélectionné.

9. Procédé selon la revendication 8, **caractérisé en ce que** la fabrication (48) est effectuée à l'aide d'une imprimante 3D (35) à laquelle l'ensemble de données (44) sélectionné est apporté à partir de l'ordinateur (33).

10. Procédé selon la revendication 9, **caractérisé en ce que** la pyramide à miroirs (2) est une pyramide creuse et chaque facette de miroir ($7_i$) est imprimée par l'imprimante 3D (35) avec une épaisseur de paroi ($W_i$) individuelle, où les épaisseurs de parois ($W_i$) sont calculées par l'ordinateur (33) et sont apportées à l'imprimante 3D (35) de telle manière que la pyramide à miroirs (2) fabriquée est équilibrée dynamiquement autour de l'axe de rotation (5).

*Fig. 1*

*Fig. 2*

Fig. 3a          Fig. 3b          Fig. 3c

EP 4 270 087 B1

*Fig. 5*

*Fig. 4*

**Fig. 6a**

**Fig. 6b**

**Fig. 6c**

**Fig. 6d**

**Fig. 6e**

**Fig. 6f**

**Fig. 6g**

**Fig. 6h**

**Fig. 6i**

**Fig. 6j**

**Fig. 6k**

**Fig. 6l**

EP 4 270 087 B1

| | $\alpha_1 - 45°$ | $\alpha_2 - 45°$ | $\alpha_3 - 45°$ | $\alpha_4 - 45°$ | $\alpha_5 - 45°$ | $S_k$ [mm²] |
|---|---|---|---|---|---|---|
| $P_1$ | 0° | 5° | - 5° | - 10° | 10° | 262 |
| $P_2$ | 0° | 5° | - 5° | 10° | - 10° | 292 |
| $P_3$ | 0° | 5° | - 10° | - 5° | 10° | 234 |
| $P_4$ | 0° | 5° | 10° | - 5° | - 10° | 210 |
| $P_5$ | 0° | - 5° | 5° | - 10° | 10° | 290 |
| $P_6$ | 0° | - 5° | 5° | 10° | - 10° | 267 |
| $P_7$ | 0° | - 5° | - 10° | 5° | 10° | 211 |
| $P_8$ | 0° | - 5° | - 10° | 10° | 5° | 251 |
| $P_9$ | 0° | - 5° | 10° | - 10° | 5° | 304 |
| $P_{10}$ | 0° | - 10° | 5° | - 5° | 10° | 250 |
| $P_{11}$ | 0° | - 10° | 5° | 10° | - 5° | 239 |
| $P_{12}$ | 0° | - 10° | - 5° | 5° | 10° | 197 |

*Fig. 7*

*Fig. 8*

input I, {$\alpha_i$}  ⟍ 41

gen $P_k = [\alpha_1, ..., \alpha_l]$  ⟍ 42

for k

calc $S_k(P_k)$  ⟍ 45

$S_{min} := \min\{S_k\}$

$P_{opt} := P_{min}$  ⟍ 46

calc $W_i(P_{opt})$  ⟍ 47

mfct pyr( {$\alpha_i$}, $P_{opt}$ [, {$W_i$}] )  ⟍ 48

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3792653 A1
- AT 510045 A4

- EP 3982150 A1